# EUROPEAN PATENT APPLICATION

(11) **EP 4 691 261 A1**
(43) Date of publication of application: **11.02.2026**
(21) Application number: 24779461.3
(22) Date of filing: 13.03.2024
(51) Int. Cl.: A23L 7/10

(54) **LOOSENING IMPROVER FOR RICE AND METHOD FOR PRODUCING LOOSENING IMPROVER FOR RICE**

(30) Priority: 30.03.2023 JP 2023055166
(71) Applicant: Fuji Oil Company, Limited, Izumisano-shi Osaka 598-8540 (JP)
(72) Inventor: FUKUHARA, Hiroaki, Izumisano-shi, Osaka 598-8540 (JP); FUJII, Nanae, Izumisano-shi, Osaka 598-8540 (JP)
(74) Representative: Boult Wade Tennant LLP
(86) International application number: PCT/JP2024/009772
(87) International publication number: WO 2024/203332

(57) **Abstract**

An object of the present invention is to provide a loosening improver that can suppress precipitation and solution turbidity when dissolved in an aqueous vinegar solution and can improve a loosening property of boiled rice, in the preparation of vinegar-containing boiled rice such as sushi rice. It has been found that a loosening improver for boiled rice containing an amylase-treated and protease-treated product of a water-soluble polysaccharide derived from legumes suppresses precipitation and solution turbidity even when dissolved in the aqueous vinegar solution, and improves the loosening property of the boiled rice.

## Description

### Technical Field

The present invention relates to a loosening improver for boiled rice and a method for producing a loosening improver for boiled rice.

### Background Art

In recent years, needs for processed foods have been increasing due to dietary diversity. In particular, processed boiled rice foods are sold in a large quantities, as processed/cooked products, in convenience stores, supermarkets, and the like, and are consumed by many consumers. Among them, the processed boiled rice foods included in a packed lunch, rice ball, and sushi product sold in convenience stores and the like are quite popular, and there is a demand for delicious and high-quality products. For the distributed and marketed boiled rice, a loosening property and the like of the boiled rice are very important quality indicators.

Among the processed boiled rice foods, studies have been made to improve texture, loosening, and the like of the boiled rice including vinegared rice. For example, there has been a technique for improving texture of sushi rice by mixing boiled rice after rice cooking with sushi vinegar characterized by containing vinegar, salt, a high-intensity sweetener, and a polysaccharide thickener, the sushi vinegar including 20 to 100% of the high-intensity sweetener relative to a total sweetness of all sweeteners (Patent Document 1). As a known method for improving the loosening property in order to solve a problem of a binding property between boiled rice grains, there has been a technique for improving the loosening property and the like of the boiled rice by using an oil and/or fat containing a plurality of types of emulsifiers for the boiled rice (Patent Document 2).

### Citation List

### Patent Document

Patent Document 1: JP 2015-027263 A
Patent Document 2: JP H03-175940 A
Patent Document 3: JP H06-121647 A

### Summary of Invention

### Technical Problem

The techniques of Patent Documents 1 and 2 give an insufficient loosening property of vinegar-containing boiled rice such as sushi rice, and there is sufficient room for improvement.

Also, in production of the vinegared rice, a previously prepared vinegar is mixed with the boiled rice after rice cooking. In the case of using a material which improves the loosening and the texture of the boiled rice, it is efficient to mix the material with the vinegar in advance. However, for the improver of Patent Document 1 and the like, the mixing causes problems such as precipitation and solution turbidity due to insolubilization, depending on the material used. Regarding such precipitation and turbidity, cooking vinegar such as sushi vinegar is often packed in a transparent container such as a bottle and distributed, and this is also a problem from the viewpoint of deterioration in appearance. Further, there has been a technique for improving the loosening of a cereal processed food with a water-soluble hemicellulose as in Patent Document 3. However, influence in blending the hemicellulose in a vinegar solution is also unclear.

An object of the present disclosure is to provide a loosening improver that can suppress precipitation and solution turbidity when dissolved in an aqueous vinegar solution and can improve the loosening property of the boiled rice, in the preparation of vinegar-containing boiled rice such as sushi rice.

### Solution to Problem

As a result of intensive studies to solve the above problems, it has been found that a loosening improver for boiled rice, the loosening improver containing an amylase-treated and protease-treated product of a water-soluble polysaccharide derived from legumes, suppresses precipitation and solution turbidity even when dissolved in an aqueous vinegar solution, and improves the loosening property of the boiled rice. Based on such findings, the loosening improver for boiled rice according to the present embodiment has been completed.

That is, the present disclosure relates to:
(1) A loosening improver for boiled rice, containing an amylase-treated and protease-treated product of a water-soluble polysaccharide derived from legumes, wherein the loosening improver is to be used by being dissolved in an aqueous vinegar solution;
(2) The loosening improver for boiled rice according to (1), wherein the water-soluble polysaccharide derived from legumes is a water-soluble pea polysaccharide or a water-soluble soybean polysaccharide;
(3) A method for producing a loosening improver for boiled rice to be used by being dissolved in an aqueous vinegar solution, the method including all the following steps (a) to (c):
   (a) providing a slurry containing a water-soluble polysaccharide derived from legumes, the slurry being provided by heating a raw material derived from the legumes and extracting the water-soluble polysaccharide derived from the legumes;
   (b) subjecting the slurry to solid-liquid separation to provide a solution containing the water-soluble polysaccharide derived from the legumes; and
   (c) adding an amylase and a protease to the solution containing the water-soluble polysaccharide derived from the legumes to allow enzyme reaction, to produce an enzyme-treated water-soluble polysaccharide derived from the legumes
(4) The method for producing a loosening improver for boiled rice according to (3), wherein the water-soluble polysaccharide derived from the legumes is a water-soluble pea polysaccharide or a water-soluble soybean polysaccharide;
(5) A method for improving loosening of boiled rice, the method including mixing the loosening improver for boiled rice described in (1) with an aqueous vinegar solution to prepare a mixed liquid, and adding the mixed liquid to the boiled rice;
(6) A method for improving loosening of boiled rice, the method including mixing the loosening improver for boiled rice described in (2) with an aqueous vinegar solution to prepare a mixed liquid, and adding the mixed liquid to the boiled rice;
(7) A method for producing boiled rice, the method including mixing the loosening improver for boiled rice described in (1) with an aqueous vinegar solution to prepare a mixed liquid, and adding the mixed liquid to the boiled rice;
(8) A method for producing boiled rice, the method including mixing the loosening improver for boiled rice described in (2) with an aqueous vinegar solution to prepare a mixed liquid, and adding the mixed liquid to the boiled rice;
(9) A vinegar containing the loosening improver for boiled rice described in (1); and
(10) A vinegar containing the loosening improver for boiled rice described in (2).

### Advantageous Effects of Invention

The loosening improver according to the present embodiment suppresses precipitation and solution turbidity even when dissolved in vinegar used in production of vinegar-containing boiled rice. In addition, addition of the loosening improver according to the present embodiment to the boiled rice can impart an excellent loosening property.

### Description of Embodiments

### Loosening Improver for Boiled Rice to Be Used by Being Dissolved in Aqueous Vinegar Solution

A loosening improver for boiled rice to be used by being dissolved in an aqueous vinegar solution according to the present embodiment is characterized by containing an amylase-treated and protease-treated product of a water-soluble pea polysaccharide.

The loosening improver for boiled rice according to the present embodiment is effective as a loosening improver for boiled rice such as vinegared rice prepared by dissolving the loosening improver in an aqueous vinegar solution and mixing the resultant solution with the boiled rice.

When vinegar-containing boiled rice is prepared, the vinegar-containing boiled rice is usually provided by adding a vinegar-containing solution such as the aqueous vinegar solution or a vinegar-containing seasoning liquid to the boiled rice and mixing them. In this case, when a known water-soluble soybean polysaccharide or water-soluble pea polysaccharide is mixed with the aqueous vinegar solution, there are phenomena of precipitation and solution turbidity. As a result, the resultant solution is not uniform, and the components of the solution are not uniformly mixed when the solution is mixed with the boiled rice, thereby problematically causing an insufficient loosening property of the boiled rice.

The loosening improver for boiled rice according to the present embodiment contains a water-soluble pea polysaccharide treated with two types of enzymes, amylase and protease. Even when the enzyme-treated water-soluble pea polysaccharide is mixed with the aqueous vinegar solution, the precipitation does not occur, the solution does not become turbid and maintains its transparency, and the enzyme-treated water-soluble pea polysaccharide has a function of improving the loosening property of the boiled rice.

A content of the amylase-treated and protease-treated product of the water-soluble pea polysaccharide used in the loosening improver for boiled rice according to the present embodiment can be approximately 50 mass% or more, preferably 60 mass% or more, more preferably 70 mass% or more, 75 mass% or more, 80 mass% or more, 85 mass% or more, 90 mass% or more, 95 mass% or more, or 100 mass% in a solid content of the loosening improver.

### Aqueous Vinegar Solution

In the present embodiment, the aqueous vinegar solution to be mixed with the boiled rice will be described.

As the vinegar, any of brewed vinegar and synthetic vinegar can be used. Examples of the brewed vinegar include black vinegar, rice vinegar, grain vinegar, apple vinegar, grape vinegar, fruit vinegar, and the brewed vinegar.

A proportion of the vinegar in the aqueous vinegar solution is approximately from 10 to 90 mass%, and can be preferably from 10 to 85 mass% or from 20 to 85 mass%.

The aqueous vinegar solution may contain, if necessary, seasonings, such as common salt, an amino acid, a saccharide, a starch, a pH adjuster, an acidulant, sodium glutamate, a plant protein hydrolysate, a yeast extract, and/or Kombu extract.

Examples of the saccharide include monosaccharides such as glucose, disaccharides such as maltose and trehalose, oligosaccharides, Mizuame, glucose-fructose syrup, dextrin, and sugar alcohols.

In the present embodiment, the vinegar containing the loosening improver for boiled rice according to the present embodiment or the aqueous vinegar solution containing the loosening improver for boiled rice according to the present embodiment can be used.

### Water-Soluble Polysaccharide Derived from Legumes

In the present embodiment, the water-soluble polysaccharide derived from the legumes refers to a water-soluble polysaccharide extracted from seeds of legumes. The legumes are not particularly limited, and examples of the legumes include adzuki beans, mung beans, cowpeas, kintoki beans, scarlet runner beans, Haibushi Pole beans, butter beans, fava beans, peas, chickpeas, carob, sword beans, Lupin beans, lentils, soybeans, and peanuts. In the present embodiment, the water-soluble polysaccharide derived from the legumes is preferably a water-soluble pea polysaccharide or a water-soluble soybean polysaccharide, and more preferably a water-soluble pea polysaccharide.

Hereinafter, the water-soluble pea polysaccharide will be described as an example of the water-soluble polysaccharide derived from the legumes.

### Water-Soluble Pea Polysaccharide

The water-soluble pea polysaccharide used in the loosening improver for boiled rice according to the present embodiment may be produced from a raw material derived from peas or may be produced from a commercially available product. An example of the production from the raw material derived from the peas will be described below.

### Raw Material Derived from Peas Seeds

As the raw material derived from peas seeds, a pea residue prepared from peas is suitable. The pea residue is industrially a fraction (residue) provided by removing an outer skin of a pea seed, pulverizing a cotyledon part of the pea seed by a dry or wet method, and then separating and removing starch.

### Method for Producing Water-Soluble Pea Polysaccharide

The above-described raw material derived from the peas is added with water, adjusted to preferably have a pH of 3 to 7 using an acid such as hydrochloric acid, phosphoric acid, or sulfuric acid, and heated at a heating temperature preferably higher than 100°C for a heating time preferably from 10 to 300 minutes, and then, a water-soluble pea polysaccharide is extracted, thereby providing a slurry containing the water-soluble pea polysaccharide.

The pH is adjusted to more preferably a pH of 4 to 6.5, and still more preferably a pH of 4 to 6. The heating temperature is more preferably higher than 100°C and 160°C or lower, still more preferably higher than 100°C and 150°C or lower, and yet still more preferably higher than 100°C and 130°C or lower. The heating time is more preferably from 30 to 240 minutes, and still more preferably from 60 to 210 minutes.

The slurry is subjected to solid-liquid separation using a separation device such as a centrifuge or a filter press to provide a solution containing the water-soluble pea polysaccharide.

Next, a protease and an amylase are added to the solution to allow enzyme reaction. A timing of the addition of each enzyme is not particularly limited. For example, the protease and the amylase can be added simultaneously. Alternatively, the protease can be added to allow an enzyme reaction, and then the amylase can be added to allow an enzyme reaction. Alternatively, the amylase can be added to allow the enzyme reaction, and then a protease can be added to allow the enzyme reaction.

The liquid after the enzyme reaction is preferably purified by a method such as electrodialysis or membrane treatment. Thereafter, the liquid is sterilized as necessary and dried by freeze-drying, spray-drying, or the like, whereby the water-soluble pea polysaccharide used in the loosening improver for boiled rice according to the present embodiment can be provided.

### Amylase

Examples of amylases include those derived from animals such as pancreas of cattle and swine, those derived from plants such as malt, barley, wheat, sweet potato, and soybeans, and those derived from microorganisms such as bacteria, fungi, yeast, filamentous fungi, and actinomycetes.

Examples of amylases derived from the microorganisms include amylases derived from the genus Bacillus and the genus Aspergillus, and, for example, α-amylase which hydrolyzes a glucosidic bond inside starch in which a plurality of glucoses are bonded in a chain shape and forms several oligosaccharide chains is suitable. One or more types of β-amylases may be combined. The one or more types of β-amylases are enzymes that cleave maltose in order from a reducing end of starch.

For example, as a pH condition, the amylase reaction is performed at preferably a pH of from 3 to 8, more preferably a pH of 4 to 8, and still more preferably a pH of 5 to 8.

An enzyme reaction temperature is preferably from 40 to 70°C, more preferably from 45°C to 65°C, and still more preferably from 50°C to 60°C. An enzyme reaction time is more preferably from 20 to 100 minutes, and still more preferably from 30 to 90 minutes.

An amount of the amylase to be added is preferably from 0.01 to 3 mass%, more preferably from 0.03 to 2 mass%, and still more preferably from 0.05 to 2 mass%, from 0.07 to 2 mass%, from 0.1 to 2 mass%, or from 0.1 to 1 mass% relative to a solid content of the solution containing the water-soluble pea polysaccharide.

### Protease

As the protease, one type or two or more types of proteases classified into "metal protease" (neutral proteases derived from the genus *Bacillus,* neutral proteases derived from the genus *Streptomyces,* neutral proteases derived from the genus *Aspergillus, Thermoase,* and the like), "acid protease" (pepsin, acid proteases derived from the genus *Aspergillus, Sumizyme* AP, and the like), "thiol protease" (bromelain, papain, and the like), and "serine protease" (trypsin, chymotrypsin, subtilisin, alkaline proteases derived from the genus *Streptomyces,* alkaline proteases derived from the genus *Aspergillus, Alcalase, Bioprase,* and the like) in classification of proteases can be acted. Any types of endoproteases or exoproteases can be used. For example, FoodPro Alkaline Protease (available from Danisco Japan Ltd.), Alcalase (available from Novozymes), or Protease A "Amano" 3D or Protease P "Amano" 3SD (available from Amano Enzyme Inc.) can be used. Protein may be decomposed using an enzyme of these enzymes under optimum conditions for each of the enzymes (temperature, pH, time).

For example, as a pH condition, the protease reaction is performed at preferably a pH of from 4 to 10, more preferably a pH of from 4 to 9, and still more preferably a pH of from 4 to 8, a pH of from 5 to 8, a pH of 5 to 9, or a pH of 6 to 9.

An enzyme reaction temperature is preferably from 40 to 70°C, more preferably from 45°C to 65°C, and still more preferably from 50°C to 60°C. An enzyme reaction time is more preferably from 20 to 100 minutes, and still more preferably from 30 to 90 minutes.

An amount of the protease to be added is preferably from 0.01 to 3 mass%, more preferably from 0.03 to 2 mass%, and still more preferably from 0.05 to 2 mass%, from 0.07 to 2 mass%, from 0.1 to 2 mass%, or from 0.1 to 1 mass% relative to the solid content of the solution containing the water-soluble pea polysaccharide.

Next, the water-soluble soybean polysaccharide will be described as an example of the water-soluble polysaccharide derived from the legumes.

### Water-Soluble Soybean Polysaccharide

The water-soluble soybean polysaccharide used in the loosening improver for boiled rice according to the present embodiment may be produced from a raw material derived from soybeans or may be produced from a commercially available product. An example of production from the raw material derived from soybeans will be described below.

### Raw Material Derived from Soybeans

The raw material derived from soybeans is soybean seeds, preferably grain parts of the soybean seeds, and more preferably soybean curd refuse produced as a by-product in production of tofu, soybean protein isolate, or the like. It is still more preferable to use soybean curd refuse provided from defatted soybeans.

### Method for Manufacturing Water-Soluble Soybean Polysaccharide

The above-described raw material derived from the peas is added with water, adjusted to preferably have a pH of 3 to 7 using an acid such as hydrochloric acid, phosphoric acid, or sulfuric acid, and heated at a heating temperature preferably higher than 100°C for a heating time preferably from 10 to 300 minutes, and then, a water-soluble pea polysaccharide is extracted, thereby providing a slurry containing the water-soluble pea polysaccharide.

The pH is adjusted to more preferably a pH of 4 to 6.5, and still more preferably a pH of 4 to 6. The heating temperature is more preferably higher than 100°C and 160°C or lower, still more preferably higher than 100°C and 150°C or lower, and yet still more preferably higher than 100°C and 130°C or lower. The heating time is more preferably from 30 to 240 minutes, and still more preferably from 60 to 210 minutes.

The slurry is subjected to solid-liquid separation using a separation device such as a centrifuge or a filter press to provide a solution containing the water-soluble soybean polysaccharide.

The solution containing the water-soluble soybean polysaccharide is then treated with an amylase and a protease in the same manner as that in the water-soluble pea polysaccharide.

The loosening improver according to the present embodiment has the following characteristics (A) to (C).

### (A) Amount of Precipitate When Loosening Improver Is Dissolved in Aqueous Vinegar Solution

The loosening improver according to the present embodiment is characterized in that precipitation due to insolubilization of components of the loosening improver is less likely to occur when the loosening improver is dissolved in the vinegar solution.

An amount of precipitate is measured by the following procedure.

The aqueous vinegar solution used in the measurement of the amount of the precipitate is obtained by mixing 857.1 g of a grain vinegar having a known acidity (Grain vinegar, acidity: 4.2%, available from Mizkan Corporation), 67.2 g of common salt, and 142.9 g of water, and has an acidity of 3.6 mass% and a salt concentration of 6.3 mass% with common salt. The loosening improver according to the present embodiment was dissolved in the aqueous solution so as to attain 5 mass%. Into a 120 ml-volume screw tube, 100 ml of the aqueous vinegar solution is then dispensed, and allowed to stand at room temperature for 4 days, and then, height of precipitate is measured.

A proportion of the height of the precipitate to height of the entire solution is defined as an amount of the precipitate. That is, the higher the value, the lower the stability of the vinegar solution with time, and the lower the value, the higher the stability with time. When a measured value of the amount of the precipitate is 1% or less, it is determined that the precipitation is less likely to occur and the stability is high.

### (B) Turbidity when Loosening Improver Is Dissolved in Aqueous Vinegar Solution

The loosening improver according to the present embodiment is characterized in that turbidity is low when the loosening improver is dissolved in the aqueous vinegar solution.

Specifically, the aqueous vinegar solution after being allowed to stand for 4 days, similar to that used in the measurement of the amount of the precipitate, is used. The turbidity is a value of absorbance (OD610, cell length: 1 cm) of a solution obtained by collecting a supernatant part of the aqueous vinegar solution with a dropper or the like, measured at a wavelength of 610 nm using a spectrophotometer (JASCO U-best 55, available from JASCO Corporation). When the turbidity is 1.0 or less, the solution is determined to have high clarity.

### (C) Starch Content

The water-soluble pea polysaccharide used in the loosening improver according to the present embodiment is characterized by having a low starch content.

The starch content is 1 mass% or less when measured by a method for measuring the starch content shown below.

### Method for Quantifying Starch Content

The starch content of the water-soluble pea polysaccharide used in the loosening improver according to the present embodiment is measured as follows using a total starch amount measurement kit from Biocon (Japan) Ltd.

The following measurement method is a method in the case of using a total starch content measurement kit (Lot 131201-1).

When a sample is measured, a corn starch standard included with the kit is also measured at the same time to confirm that a calculated starch content is not significantly different from an indicated starch concentration.

A procedure manual included with the kit shows a plurality of measurement methods, and among them, the measurement is performed by the following method.

From a sample passed through a 0.5 mm screen, 100 mg is weighed and placed into a test tube, and suspended in 5 mL of 80% (v/v) ethanol, and then the suspension is heated from 80 to 85°C for 5 minutes. Then, the suspension is stirred with a vortex mixer, and added with 5 mL of 80% (v/v) ethanol, the mixture is centrifuged at 1800 × g for 10 minutes, and the supernatant is then discarded. The remaining precipitate is resuspended in 10 mL of 80% (v/v) ethanol, the suspension is centrifuged at 1800 × g for 10 minutes, and the supernatant is then discarded.

To the precipitate, 2 mL of 2 M KOH is added, and the test tube is placed in iced water followed by stirring with a stirrer for 20 minutes. After 20 minutes, 8 mL of 1.2 M sodium acetate buffer (pH: 3.8) is added, and the resultant mixture is stirred with a stirrer. Immediately, 0.1 mL each of α-amylase and AMG (amyloglucosidase) included with the kit are added and mixed, and the mixture is warmed in a water bath at 50°C for 30 minutes. The mixture is stirred with the vortex mixer every 5 minutes during the above warming for 30 minutes. Thereafter, when the starch content of the sample is 10% or more, the sample is made up with distilled water using a 100 mL volumetric flask, and the supernatant obtained by centrifugation of the resultant solution at 1800 × g for 10 minutes is used for a reaction using GOPOD (glucose oxidase/peroxidase) as a substrate. When the starch content of the sample is less than 10%, the supernatant obtained by centrifuging the resultant solution warmed at 50°C for 30 minutes as described above at 1800 × g for 10 minutes is used for the reaction using GOPOD as a substrate.

The above method is a method of carrying out steps up to Step 5 of example (e) in the procedure manual included with the kit, then carrying out steps from Step 4 to Step 8 of example (c), and performing treatments after Step 7 of example (a).

### Addition Method

The addition of the loosening improver according to the present embodiment to boiled rice can improve the loosening property of the boiled rice.

As an addition method, there is a method of adding the loosening improver for boiled rice according to the present embodiment dissolved in an aqueous vinegar solution to cooked rice. As another method, there is a method in which an aqueous solution of the loosening improver in water is prepared, vinegar and the like are added to this aqueous solution, and the resultant solution is added to boiled rice. As still another method, there is a method in which the aqueous solution of the loosening improver dissolved in water and the aqueous vinegar solution are separately prepared, and a mixture of these solutions is added to the boiled rice.

An amount of the loosening improver according to the present embodiment to be added to the boiled rice is preferably from 0.01 to 5 mass% in terms of the amount of the water-soluble polysaccharide derived from the legumes relative to the mass of raw rice. The amount is more preferably from 0.05 to 3 mass%, and can also be still more preferably from 0.05 to 2 mass%, from 0.1 to 2 mass%, or from 0.1 to 1 mass%.

The loosening improver according to the present embodiment can be used in combination with an additional additive as appropriate as long as an effect of the present invention is not affected. Examples of the additional additive include emulsifiers such as glycerin fatty acid ester, sorbitan fatty acid ester, stearoyl lactate, polysorbate, and lecithin, and oily substances such as general animal and plant oils and/or fats and tocopherol which is a fat-soluble vitamin. Also, the examples of the additional additive include monosaccharides such as glucose and fructose, oligosaccharides such as sucrose, maltose, fructose, raffinose, maltotriose, trehalose, stachyose, and maltotetraose, sugar alcohols, dextrin, and funori. Furthermore, the examples of the additional additive include gelatin, albumin such as whey, casein sodium, soluble collagen, egg albumen, yolk powder, and proteinaceous substances such as soybean protein. Moreover, the examples of the additional additive include salts such as calcium fortifier, and pH adjusters such as sodium acetate. As the additional additive, polysaccharides such as carrageenan, tamarind seed gum, gum arabic, curdlan, alginic acid or a derivative thereof, agar, furcellaran, pullulan, hyaluronic acid, cyclodextrin, or chitosan, or a hydrolysate of these polysaccharides can also be used concurrently.

### Examples

Examples will now be described below. In the examples, % means mass% unless otherwise specified.

### Comparative Production Example 1

To a dried pea residue obtained in a pea starch production step, an amount of water 15 times that of the dried pea residue was added, a pH of the formed aqueous solution was adjusted to 6 with hydrochloric acid, the resultant mixture was heated at 125°C for 70 minutes, and a water-soluble pea polysaccharide was extracted, thereby providing a slurry containing the water-soluble pea polysaccharide. A pH of the slurry cooled to room temperature was 5.3. The slurry was subjected to solid-liquid separation using a centrifuge (10000 × G, 30 minutes) to provide a solution containing the water-soluble pea polysaccharide. The solution was desalted by electrodialysis, sterilized at 100°C for 10 minutes, and then freeze-dried to provide a loosening improver A.

### Comparative Production Example 2

An α-amylase (BAN480L, available from Novozymes Japan Ltd.) was added in an amount of 0.2% relative to a solid content of a solution containing the water-soluble pea polysaccharide obtained by the same treatment as that in Comparative Example 1, and the resultant mixture was reacted at a reaction temperature of 60°C for 30 minutes to provide an enzyme-treated liquid. The enzyme-treated liquid was adjusted to have a pH of 5.3 with hydrochloric acid, and desalted, sterilized and dried in the same manner as that in Comparative Example 1 to provide a loosening improver B.

### Comparative Production Example 3

A solution containing the water-soluble pea polysaccharide obtained by the same treatment as that in Comparative Example 1 was adjusted to have a pH of 8 with sodium hydroxide, and a protease (FoodPro Alkaline Protease, available from Danisco Japan Ltd.) was added in an amount of 0.1% relative to a solid content of the solution containing the water-soluble pea polysaccharide. The resultant mixture was reacted at a reaction temperature of 60°C for 60 minutes to provide an enzyme-treated liquid. The enzyme-treated liquid was adjusted to have a pH of 5.3 with hydrochloric acid, and desalted, sterilized and dried in the same manner as that in Comparative Example 1 to provide a loosening improver C.

### Comparative Production Example 4

A solution containing the water-soluble pea polysaccharide obtained by the same treatment as that in Comparative Example 1 was adjusted to have a pH of 8 with sodium hydroxide and treated at 60°C for 60 minutes to provide a heat-treated solution containing the water-soluble pea polysaccharide. The resulting solution was adjusted to have a pH of 5.3 with hydrochloric acid, and then an α-amylase (BAN480L, available from Novozymes Japan Ltd.) was added in an amount of 0.2% relative to a solid content of the solution. The resultant mixture was reacted at a reaction temperature of 60°C for 30 minutes to provide an enzyme reaction liquid. The enzyme reaction liquid was desalted, sterilized and dried in the same manner as that in Comparative Example 1 to provide a loosening improver D.

### (Production Example 1)

A solution containing the water-soluble pea polysaccharide obtained by the same treatment as that in Comparative Example 1 was adjusted to have a pH of 8 with sodium hydroxide, and a protease (FoodPro Alkaline Protease, available from Danisco Japan Ltd.) was added in an amount of 0.1% relative to a solid content of the solution containing the pea polysaccharide. The resultant mixture was reacted at a reaction temperature of 60°C for 60 minutes to provide an enzyme-treated liquid.

Then, the enzyme-treated liquid was adjusted to have a pH of 5.3 with hydrochloric acid, and an α-amylase (BAN480L, available from Novozymes Japan Ltd.) was added in an amount of 0.2% relative to the solid content of the solution containing the water-soluble pea polysaccharide. The resultant mixture was reacted at a reaction temperature of 60°C for 30 minutes to provide an enzyme-treated liquid. The enzyme-treated liquid was desalted, sterilized and dried in the same manner as that in Comparative Example 1 to provide a loosening improver E.

### (Production Example 2)

A loosening improver F was prepared in the same manner as that in Example 1 except that a protease (FoodPro Alkaline Protease, available from Danisco Japan Ltd.) was added in an amount of 0.8% relative to a solid content of a solution containing the water-soluble pea polysaccharide, and that an α-amylase (BAN480L, available from Novozymes Japan Ltd.) was added in an amount of 0.4% relative to the solid content of the solution containing the water-soluble pea polysaccharide.

### (Production Example 3)

A loosening improver G was prepared through production in the same manner as that in Example 1 except that "Protease A" (available from Amano Enzyme Inc.) was used as the protease and added in an amount of 0.8% relative to a solid content of a solution containing the water-soluble pea polysaccharide.

### (Production Example 4)

A loosening improver H was prepared in the same manner as that in Example 1 except that a protease (FoodPro Alkaline Protease, available from Danisco Japan Ltd.) was added in an amount of 0.8% relative to a solid content of the solution containing the water-soluble pea polysaccharide, and that a β-amylase (β-Amylase "Amano", available from Amano Enzyme Inc.) was used as the amylase and added in an amount of 0.2% relative to the solid content of the solution containing the water-soluble pea polysaccharide.

### Evaluation of Loosening of Boiled Rice (Comparative Examples 1 to 4 and Examples 1 to 4)

Firstly, 857.1 g of grain vinegar having a known acidity (Grain vinegar, acidity: 4.2%, available from Mizkan Corporation), 67.2 g of common salt, and 142.9 g of water were mixed to prepare a vinegar-containing solution having an acidity of 3.6% and a salt concentration of 6.3%. To the vinegar-containing solution, one of the loosening improvers A to H was added to attain 5% in the aqueous vinegar solution, thereby providing aqueous vinegar solutions, each corresponding to any one of the loosening improvers A to H. An amount of a precipitate formed and a turbidity were measured for each of the aqueous vinegar solutions.

Then, 500 g of Koshihikari was thoroughly rinsed with water, immersed therein for 1 hour, and water was added to the immersed Koshihikari so that the total added water was 750 g. And then, Koshihikari was cooked using a household rice cooker. To the cooked rice, one of the aqueous vinegar solutions was added in an amount of 6% relative to the raw rice (corresponding to 0.3% as the amount of the water-soluble pea polysaccharide added relative to the amount of the raw rice). The cooked rice and the added aqueous vinegar solution were mixed until they were uniformly mixed, and then allowed to cool to room temperature, thereby providing vinegar-containing boiled rice, each corresponding to each one of the aqueous vinegar solutions.

Each boiled rice was evaluated for the loosening property by 10 panelists. Each panelist evaluated the loosening property on a scale of 1 to 5 points based on criteria in Table 1, and an average score from the panelists was taken as the evaluation of loosening property. The loosening improver with the average score of 4.0 or higher was considered as a improver having good loosening property. The evaluation results are shown in Table 2.

**(Table 1)**

| State of loosening | Score |
|---|---|
| Does not loosen at all | 1 |
| Quite difficult to loosen | 2 |
| Difficult to loosen | 3 |
| Easy to loosen | 4 |
| Quite easy to loosen | 5 |

**(Table 2)**

| | Comparative Example 1 | Comparative Example 2 | Comparative Example 3 | Comparative Example 4 | Example 1 | Example 2 | Example 3 | Example 4 |
|---|---|---|---|---|---|---|---|---|
| | Loosening improver A | Loosening improver B | Loosening improver C | Loosening improver D | Loosening improver E | Loosening improver F | Loosening improver G | Loosening improver H |
| Amylase treatment | Absent | Present | Absent | Present | Present | Present | Present | Present |
| Protease Treatment | Absent | Absent | Present | Absent | Present | Present | Present | Present |
| Starch content (%) | 17.5 | 0.6 | 14.1 | 0.1 | 0.2 | 0.1 | 0.1 | 0.8 |
| Amount (%) of precipitate | 47 | 0 | 39 | 0 | 0 | 0 | 0 | 0 |
| Turbidity (OD 610 nm) | 1.65 | 1.34 | 1.02 | 1.41 | 0.73 | 0.78 | 0.11 | 0.57 |
| Loosening property | 1.8 | 3.5 | 2.6 | 3.5 | 4.4 | 4.4 | 4.6 | 4.8 |

From the results of Examples 1 to 4, it was found that, when any of the loosening improvers E to H was used, precipitation did not occur when dissolved in the aqueous vinegar solution, the turbidity was low, and the stability when dissolved in the aqueous vinegar solution was high. On the other hand, when the loosening improver A subjected to neither amylase treatment nor protease treatment as in Comparative Example 1 was used, the evaluations of both of the amount of the precipitate and the turbidity were poor, and the stability when it was dissolved in the aqueous vinegar solution was poor. In addition, as in Comparative Examples 2 or 4, when the loosening improver B or D, which was not subjected to the protease treatment, was used, the evaluation of the turbidity was poor, and the stability when dissolved in the aqueous vinegar solution was poor. In addition, as in Comparative Example 3, when the loosening improver C which was not subjected to the amylase treatment was used, the evaluation of the amount of the precipitate was poor, and the stability when dissolved in the aqueous vinegar solution was poor. In addition, the loosening improvers E to H imparted the loosening property better than those imparted by the loosening improvers A to D.

## Claims

1. A loosening improver for boiled rice, comprising an amylase-treated and protease-treated product of a water-soluble polysaccharide derived from legumes, wherein the loosening improver is to be used by being dissolved in an aqueous vinegar solution.

2. The loosening improver for boiled rice according to claim 1, wherein the water-soluble polysaccharide derived from legumes is a water-soluble pea polysaccharide or a water-soluble soybean polysaccharide.

3. A method for producing a loosening improver for boiled rice to be used by being dissolved in an aqueous vinegar solution, the method comprising all the following steps (a) to (c):
(a) providing a slurry containing a water-soluble polysaccharide derived from legumes, the slurry being provided by heating a raw material derived from the legumes and extracting the water-soluble polysaccharide derived from the legumes;
(b) subjecting the slurry to solid-liquid separation to provide a solution containing the water-soluble polysaccharide derived from the legumes; and
(c) adding an amylase and a protease to the solution containing the water-soluble polysaccharide derived from the legumes to allow enzyme reaction, to provide an enzyme-treated water-soluble polysaccharide derived from the legumes.

4. The method for producing a loosening improver for boiled rice according to claim 3, wherein the water-soluble polysaccharide derived from the legumes is a water-soluble pea polysaccharide or a water-soluble soybean polysaccharide.

5. A method for improving loosening of boiled rice, the method comprising mixing the loosening improver for boiled rice described in claim 1 with an aqueous vinegar solution to prepare a mixed liquid, and adding the mixed liquid to the boiled rice.

6. A method for improving loosening of boiled rice, the method comprising mixing the loosening improver for boiled rice described in claim 2 with an aqueous vinegar solution to prepare a mixed liquid, and adding the mixed liquid to the boiled rice.

7. A method for producing boiled rice, the method comprising mixing the loosening improver for boiled rice described in claim 1 with an aqueous vinegar solution to prepare a mixed liquid, and adding the mixed liquid to the boiled rice.

8. A method for producing boiled rice, the method comprising mixing the loosening improver for boiled rice described in claim 2 with an aqueous vinegar solution to prepare a mixed liquid, and adding the mixed liquid to the boiled rice.

9. A vinegar comprising the loosening improver for boiled rice described in claim 1.

10. A vinegar comprising the loosening improver for boiled rice described in claim 2.
